# EUROPÄISCHE PATENTSCHRIFT

(11) **EP 3 133 018 B1**
(45) Veröffentlichungstag und Bekanntmachung des Hinweises auf die Patenterteilung: **19.12.2018**
(21) Anmeldenummer: 15181638.6
(22) Anmeldetag: 19.08.2015
(51) Int. Cl.: B64D 45/00, B64C 1/14, G08B 3/10, G08B 13/08

(54) **ANZEIGEEINRICHTUNG SOWIE TÜRANORDNUNG UND FLUGZEUG MIT EINER SOLCHEN ANZEIGEEINRICHTUNG**
INDICATION DEVICE AND DOOR ASSEMBLY AND AIRCRAFT WITH SUCH AN INDICATION DEVICE
DISPOSITIF D'AFFICHAGE ET SYSTEME DE PORTE ET AVION EQUIPE D'UN TEL DISPOSITIF D'AFFICHAGE

(43) Veröffentlichungstag der Anmeldung: 22.02.2017
(73) Patentinhaber: Airbus Operations GmbH, 21129 Hamburg (DE)
(72) Erfinder: Bredemeier, Kai, 21129 Hamburg (DE); Heuer, Carsten, 21129 Hamburg (DE)
(74) Vertreter: Bird & Bird LLP

(56) Entgegenhaltungen:
- US-A- 4 797 657
- US-A- 4 933 668
- US-A- 5 117 217
- US-A1- 2005 030 179
- US-A1- 2007 176 793
- US-B2- 6 946 959

## Beschreibung

Die vorliegende Erfindung betrifft eine Anzeigeeinrichtung zum Anzeigen eines nicht autorisierten Öffnens einer Tür eines am Boden geparkten Flugzeugs sowie eine Türanordnung und ein Flugzeug mit einer solchen Anzeigeeinrichtung.

Aus Sicherheitsgründen werden alle von außen zugänglichen Türen eines am Boden geparkten Flugzeugs mit aufklebbaren Sicherheitssiegeln versiegelt, bevor das Flugzeug unbeaufsichtigt zurückgelassen wird. Die Sicherheitssiegel sind in der Weise ausgestaltet und werden in der Weise angewendet, dass die Türen nicht geöffnet werden können, ohne die Sicherheitssiegel zu zerstören oder zumindest irreversibel zu beschädigen, so dass ein fehlendes oder beschädigtes Sicherheitssiegel anzeigt, dass während der Abwesenheit von autorisierten Personen ein nicht autorisierter Zugang zum Flugzeug stattgefunden hat oder versucht worden ist. In einem solchen Fall verlangen die typischen Sicherheitsvorkehrungen eine vollständige Untersuchung des Flugzeugs, d.h. das gesamte Flugzeug muss durch Sicherheitspersonal auf mögliche Eindringlinge und gefährliche Gegenstände hin durchsucht werden.

Die Sicherheitssiegel sind aufwändig in der Anwendung, da sie von einer Person manuell aufgeklebt, untersucht und rückstandsfrei entfernt werden müssen. Außerdem ist ihre Verwendung mit Fehlalarmen verbunden, da sie gegenüber Feuchtigkeit und Schmutz empfindlich sind und abfallen können und da sie auch ohne nicht autorisierte Öffnung einer Tür durch relative thermische Ausdehnung zwischen Tür und Flugzeugrumpf beschädigt werden können. Ferner können Sicherheitssiegel gefälscht werden oder in den Besitz nicht autorisierter Personen gelangen, und sie müssen fortlaufend nachgekauft werden, da sie nur zur einmaligen Verwendung vorgesehen sind.

US 2007/0176793 A1 beschreibt eine Alarmanlage für ein Flugzeug. Die Alarmanlage verfügt über Abstandssensoren. Wenn eine Tür oder eine Abdeckung eines Zuganges zu dem Innenraum bewegt wird, wird dies von den Abstandssensoren erkannt. Daraufhin wird von den Abstandssensoren eine Signal an die Steuervorrichtung gesandt, dass einen Warnton auslöst. Die Alarmanlage wird über eine Fernbedienung aktiviert bzw. deaktiviert. Dazu verfügt diese über einen "on" Taste und eine "off" Taste. Wenn ein eine geöffnete Tür erkannt wurde ertönt der Warnton kontinuierlich, solange bis die "off" Taste auf der Fernbedienung gedrückt wurde.

US 6,946,959 beschreibt mehrere Alarmanlagen-Einheiten die in einem Verbund betrieben werden können. Dazu werden die Alarmanlagen- Einheiten mittels Funkfrequenz-Übertragung miteinander verbunden. Wenn eines der Alarmanlagen-Geräte einen Alarm auslöst, wird ein Warnsignal ("alert signal") abgegeben. Gleichzeitig wird ein Aktionssignal ("action signal") zu den weiteren Alarmanlagen-Einheiten im Verbund übertragen. Bei Empfang diese Aktionssignals ("action signal") wird automatisch das Warnsignal ("alarm signal") abgegeben. Der Verbund aus mehreren Alarmanlagen-Einheiten wird durch einen Alarmaktiviervorrichtung ("alarm activator 20") gesteuert, der sowohl das Abgabe des Warnsignals ("alert signal") als auch des Aktionssignals ("action signal"). Wenn eine Alarmanlage-Einheit deaktiviert ist, unterbinden auch die weiteren im Verbund befindlichen Alarmanlagen-Einheiten die Abgabe des Warnsignals
Es ist Aufgabe der Erfindung, eine Anzeigeeinrichtung zum Anzeigen eines nicht autorisierten Öffnens einer Tür eines am Boden geparkten Flugzeugs, die einfach, sicher und kostengünstig in der Anwendung und nicht anfällig für Fehlalarme ist, und eine Türanordnung und ein Flugzeug mit einer solchen Anzeigeeinrichtung bereitzustellen.

Diese Aufgabe wird durch eine Anzeigeeinrichtung mit den Merkmalen des Anspruchs 1, eine Türanordnung mit den Merkmalen des Anspruchs 11 und ein Flugzeug mit den Merkmalen des Anspruchs 12 gelöst. Vorteilhafte Ausgestaltungen der Anzeigeeinrichtung sind Gegenstand der entsprechenden abhängigen Ansprüche.

Es wird eine Anzeigeeinrichtung zum Anzeigen eines nicht autorisierten Öffnens einer Tür eines am Boden geparkten, insbesondere unbeaufsichtigten, Flugzeugs bereitgestellt. Die Anzeigeeinrichtung weist einen Sensor zum Erfassen eines Abstands zwischen dem Sensor und einem in einem Erfassungsbereich von zum Beispiel zwei bis fünf Meter vor dem Sensor befindlichen Objekt auf. Wie weiter unter ausführlich erläutert wird, ist nach Anordnung des Sensors oder der gesamten Anzeigeeinrichtung an einer Tür eines Flugzeugs ein solches Objekt insbesondere ein fester Bestandteil des Flugzeugs, der eine statische Referenzposition in Bezug auf den Sensor hat. Wie gleichfalls weiter unten ausführlich erläutert wird, können weitere solche Objekte auch insbesondere Personen sein, die sich der Tür nähern.

Ferner weist die Anzeigeeinrichtung eine Signalisierungseinrichtung, die einen ersten Zustand und einen zweiten Zustand hat, und eine mit der Signalisierungseinrichtung gekoppelte Reseteinrichtung bzw. Rücksetzeinrichtung auf, die dazu eingereicht ist, bei Vornahme einer vorbestimmten Resetoperation bzw. Rücksetzoperation durch einen Benutzer die Signalisierungseinrichtung in den ersten Zustand zu versetzen. Die Reseteinrichtung kann Teil der Signalisierungseinrichtung sein oder als separate Komponente ausgebildet sein. Außerdem weist die Anzeigeeinrichtung eine Aktivierungseinrichtung auf, die dazu eingerichtet ist, als Ausgangssignal wahlweise ein vorbestimmtes Deaktivierungssignal und ein vorbestimmtes erstes Aktivierungssignal bereitzustellen. Beispielsweise kann die Aktivierungseinrichtung so ausgestaltet sein, dass die Bereitstellung des Deaktivierungssignals bzw. des ersten Aktivierungssignals gezielt durch Vornahme einer vorbestimmten Deaktivierungsoperation bzw. einer vorbestimmten ersten Aktivierungsoperation an der Aktivierungseinrichtung oder einer separaten Komponente der Anzeigeeinrichtung oder einer separaten Vorrichtung durch einen Benutzer ausgelöst werden.

Schließlich weist die Anzeigeeinrichtung eine Steuereinrichtung auf, die mit dem Sensor, der Signalisierungseinrichtung und der Aktivierungseinrichtung gekoppelt ist. Dadurch kann sie Signale von dem Sensor und der Aktivierungseinrichtung empfangen und Steuersignale an die Signalisierungseinrichtung abgeben. Die Steuereinrichtung ist angepasst, um bei Empfang des Deaktivierungssignals von der Aktivierungseinrichtung in eine erste Betriebsart zu wechseln und bei Empfang des ersten Aktivierungssignals von der Aktivierungseinrichtung in eine zweite Betriebsart zu wechseln. Der Wechsel in die erste Betriebsart bzw. in die zweite Betriebsart kann bevorzugt durch eine optische oder akustische Signalisierung oder durch unterschiedliche optische oder akustische Signalisierungen mit Hilfe einer optionalen geeigneten optischen oder akustischen Signaleinrichtung bestätigt werden, auf die später noch ausführlicher eingegangen wird.

Die Steuereinrichtung ist dabei in der Weise angepasst, dass sie in der zweiten Betriebsart, die im Gegensatz zu der ersten Betriebsart, in der das Öffnen einer Tür nicht überwacht wird, eine Überwachungsbetriebsart ist, in der das Öffnen einer Tür in der nachfolgend beschriebenen Weise überwacht wird, auf Basis eines von dem Sensor gelieferten Sensorsignals, das für den Abstand zwischen dem Sensor und dem bzw. einem Objekt charakteristisch ist, eine Änderung des Abstands zwischen dem Sensor und dem Objekt detektiert und bei Detektion einer Änderung des Abstands die Signalisierungseinrichtung bis zur Vornahme der vorbestimmten Resetoperation in den zweiten Zustand versetzt, insbesondere durch Erzeugung eines entsprechenden Steuersignals, das an die Signalisierungseinrichtung geliefert wird und auf das die Signalisierungseinrichtung entsprechend reagiert. Da die Signalisierungseinrichtung bis zur Vornahme der vorbestimmten Resetoperaton in den zweiten Zustand versetzt wird, kann der erste Zustand nicht mehr durch Herstellung des ursprünglichen oder eines bestimmten Abstands, wie zum Beispiel durch Schließen der Tür, hergestellt werden. In diesem Zusammenhang kann vorgesehen werden, dass die Steuereinrichtung bei Detektion jeder Änderung das Versetzen in den zweiten Zustand bewirkt. Es ist jedoch bevorzugt, wenn die Steuereinrichtung so angepasst ist, dass sie dies erst bei einer vorbestimmten Mindeständerung tut, d.h. bei einer Änderung des Abstands, die einen vorbestimmten Betrag überschreitet, und/oder bei einer Änderung des Abstands über einen vorbestimmten Mindestzeitraum. Durch diese Maßnahmen kann das Risiko von Fehlalarmen weiter herabgesetzt werden, da geringfügige Abstandsänderungen bzw. kurze Störungen, die nicht durch ein Öffnen einer Tür hervorgerufen werden, keinen Wechsel im Zustand der Signalisierungseinrichtung nach sich ziehen. Alternativ oder zusätzlich kann es vorteilhaft sein, wenn die Steuereinrichtung so angepasst ist, dass sie nur auf eine Änderung anspricht, die einer Vergrößerung des Abstands oder einer Verkleinerung des Abstands entspricht.

Durch die obige Ausgestaltung kann zuverlässig und eindeutig festgestellt werden, ob eine Tür eines Flugzeugs geöffnet worden ist oder ob ein anderer nicht autorisierter Zugang zum Flugzeug stattgefunden hat. Dazu wird der Sensor an einer von einer stationären Komponente, wie z.B. einem Bodenabschnitt, einem Wandabschnitt, einem Abschnitt einer Bordküche oder einem Abschnitt eines Monuments, im Innenraum eines Flugzeugs beabstandeten Tür des Flugzeugs oder an der stationären Komponente in der Weise angeordnet bzw. befestigt, dass sich die stationäre Komponente bzw. die Tür im Erfassungsbereich des Sensors befindet und ein Öffnen der Tür eine Änderung des Abstands des Sensors von der stationären Komponente bzw. der Tür bewirkt. Anschließend wird bei geschlossener Tür das erste Aktivierungssignal durch die Aktivierungseinrichtung bereitgestellt, um sicherzustellen, dass sich die Signalisierungseinrichtung zunächst im ersten Zustand befindet. Dann zeigt ein Wechsel der Signalisierungseinrichtung von dem ersten Zustand in den zweiten Zustand, der zu jeder Zeit durch Untersuchung der Signalisierungseinrichtung festgestellt werden kann, an, dass die Tür geöffnet worden ist. Zu diesem Zweck kann die Anzeigeeinrichtung eine Anzeige aufweisen, auf der ständig oder nach Benutzeranforderung dargestellt wird, ob sich die Signalisierungseinrichtung in ihrem zweiten Zustand befindet, oder eine optische Anzeige in Form von, z.B. einer Leuchtdiode. Es ist darauf hinzuweisen, dass es auch bei der erfindungsgemäßen Anzeige eine Situation geben kann, in der ein Wechsel der Signalisierungseinrichtung von dem ersten Zustand in den zweiten Zustand stattfindet, ohne dass die Tür geöffnet worden ist, nämlich wenn sich eine Person im Inneren des Flugzeugs durch den Erfassungsbereich des Sensors bewegt und dieser daher eine Abstandsänderung zu einem Objekt detektiert. Da die Signalisierungseinrichtung aber dazu vorgesehen ist, ein geparktes Flugzeug zu überwachen, an Bord dessen sich typischerweise keine Personen befinden, ist dies sogar hilfreich, da auch Ereignisse detektiert werden können, bei denen sich eine Person auf anderem Wege als durch die überwachte Tür Zutritt zum Flugzeug verschafft hat.

Die Anzeigeeinrichtung hat den Vorteil, dass einmal in einem Flugzeug zur Überwachung einer Tür angeordnet werden und dann immer wieder verwendet werden kann, so dass ihre Verwendung sehr einfach ist und auf Dauer gesehen kostengünstig ist. Außerdem ist sie weniger sensitiv gegenüber Fehlalarmen und gegenüber Manipulation als Sicherheitssiegel.

Die Anzeigeeinrichtung kann für ihren Betrieb eine eigene unabhängige Energieversorgung, wie insbesondere eine aufladbare oder nicht aufladbare Batterie, aufweisen oder aber einen Energieversorgungsanschluss zur Verbindung mit einer externen Energieversorgung, wie insbesondere einem Bord-Energieversorgungsnetz eines Flugzeugs haben.

Es ist allgemein möglich, dass die Reseteinrichtung und/oder die Aktivierungseinrichtung als Teil der Steuereinrichtung vorgesehen sind, d.h. durch die Steuereinrichtung gebildet werden bzw. in ihr implementiert sind, oder dass die Reseteinrichtung und/oder die Aktivierungseinrichtung als separate Komponenten vorgesehen sind. Es ist auch möglich, dass eine der beiden Einrichtungen als Teil der Steuereinrichtung und die andere als separate Komponente vorgesehen ist. Ferner kann unabhängig davon die Steuereinrichtung zum Beispiel in Form einer Elektronikeinheit oder als Teil einer Elektronikeinheit vorgesehen sein. Wenn die die Reseteinrichtung oder die Aktivierungseinrichtung als separate Komponente vorgesehen ist, dann kann die jeweilige Einrichtung bevorzugt Teil derselben Elektronikeinheit wie die Steuereinrichtung sein oder aber auch auf einer separaten Elektronikeinheit vorgesehen sein.

In einer bevorzugten Ausführungsform weist die Signalisierungseinrichtung eine nicht-volatile elektronische Speichereinrichtung auf. Dabei entsprechen der erste Zustand und der zweite Zustand unterschiedlichen vorbestimmten Werten, die in einem vorbestimmten Speicherbereich der Speichereinrichtung gespeichert sind. Mit anderen Worten, existiert ein vorbestimmter Speicherbereich, in dem unterschiedliche Werte gespeichert werden können. Wenn in dem Speicherbereich ein oder mehrere erste vorbestimmte Werte gespeichert sind, befindet sich die Signalisierungseinrichtung in ihrem ersten Zustand, und wenn in dem Speicherbereich ein oder mehrere zweite vorbestimmte Werte gespeichert sind, befindet sich die Signalisierungseinrichtung in ihrem zweiten Zustand. Eine derartige Ausgestaltung der Signalisierungseinrichtung ist besonders einfach zu realisieren und besonders manipulationssicher.

In dieser Ausführungsform kann die Signalisierungseinrichtung ferner eine optische Signaleinrichtung zum Abgeben eines optischen Signals und/oder eine akustische Signaleinrichtung zum Abgeben eines akustischen Signals aufweisen. Die Steuereinrichtung ist dann angepasst, um bei oder nach dem Versetzen der Signalisierungseinrichtung in den zweiten Zustand die optische Signaleinrichtung und/oder die akustische Signaleinrichtung zur Abgabe des optischen Signals bzw. des akustischen Signals zu betreiben. Insbesondere kann der zweite Zustand die Abgabe des optischen Signals und/oder des akustischen Signals aufweisen. Da der Speicherzustand der Speichereinrichtung nicht oder nicht ohne Weiteres von außen erkennbar ist, hat das Vorsehen einer optischen Signaleinrichtung und/oder einer akustischen Signaleinrichtung den Vorteil, dass ein Öffnen einer Tür unmittelbar sichtbar ist. Sollte die optische Signaleinrichtung und/oder die akustische Signaleinrichtung - beispielsweise aufgrund einer Erschöpfung oder Unterbrechung einer Energieversorgung oder einer Beschädigung der optischen Signaleinrichtung und/oder der akustischen Signaleinrichtung - ausfallen, kann der zweite Zustand immer noch durch Untersuchung des Speicherzustands der Speichereinrichtung festgestellt werden.

In einer bevorzugten Ausführungsform ist der Sensor angepasst, um den Abstand auf Basis der Laufzeit eines Signals zu erfassen, das von dem Sensor oder einer separaten Signalabgabeeinrichtung ausgesandt, von dem Objekt reflektiert und von dem Sensor empfangen wird. Zum Beispiel kann der Sensor insbesondere ein Ultraschallsensor sein. Dieser kann periodisch ein akustisches Signal im Ultraschallbereich abgeben, welches von im Erfassungs- bzw. Überwachungsbereich befindlichen Objekten reflektiert und zu dem Sensor zurückgeworfen wird. Aus der zeitlichen Differenz zwischen ausgesandtem und eintreffendem Signal kann die Entfernung des Objekts von dem Sensor ermittelt werden. Derartige Sensoren sind technisch ausgereift, kommerziell leicht erhältlich und kostengünstig. Zudem weisen Ultraschallsensoren ein vergleichsweise geringes Gewicht auf und erlauben dennoch eine präzise Messung und ein einstellbares Sensorverhalten.

In einer bevorzugten Ausführungsform weist die Aktivierungseinrichtung einen Empfänger zum Empfang drahtloser Signale auf und ist angepasst, um bei Empfang eines ersten vordefinierten drahtlosen Signals das Deaktivierungssignal und bei Empfang eines zweiten vordefinierten drahtlosen Signals das erste Aktivierungssignal bereitzustellen. Diese drahtlosen Signale können beispielsweise durch eine dedizierte Fernsteuerung abgegeben werden, ohne die eine Aktivierung und Deaktivierung nicht möglich ist. Um ein Abhören bzw. Abfangen der drahtlosen Signale zu erschweren, können drahtlose Signale geringer Reichweite verwendet werden, wie zum Beispiel NFC-Signale.

In einer besonders bevorzugten Variante dieser Ausführungsform ist der Empfänger ein RFID-Empfänger, und das erste und zweite vordefinierte drahtlose Signal sind durch einen RFID-Sender mit vordefinierter Kennung erzeugbar, der bevorzugt Teil eines Systems ist, das auch die Anzeigeeinrichtung enthält. Insbesondere können der RFID-Empfänger und der RFID-Sender gepaart sein, so dass das von dem RFID-Empfänger empfangene drahtlose Signal auf eine vorbestimmte, dem RFID-Sender zugeordnete Kennung hin untersucht wird und/oder der RFID-Empfänger erwartet, dass das von dem RFID-Sender ausgesandte drahtlose Signal mit einer vorbestimmten, dem RFID-Sender zugeordneten Verschlüsselung verschlüsselt ist, so dass der RFID-Empfänger die Authentizität des drahtlosen Signals bzw. seine Herkunft von dem RFID-Empfänger verifizieren kann. Zum Beispiel kann in dem RFID-Empfänger und dem RFID-Sender ein speziell diesen zugewiesenes Schlüsselpaar gespeichert sein. Unabhängig davon kann der RFID-Empfänger eine RFID-Leseeinrichtung sein, die durch ein ausgesandtes Abfragesignal Energie für den Betrieb des RFID-Senders bereitstellt, wenn sich dieser innerhalb eines vorbestimmten Abstands von dem RFID-Lesegerät befindet und der ein RFID-Etikett sein kann. Es reicht dann in vorteilhafter Weise, den RFID-Sender, der bevorzugt als tragbare Einheit ausgebildet ist, vorübergehend bzw. kurzzeitig in der Nähe der Anzeigeeinrichtung anzuordnen, um die Aktivierungseinrichtung zu betätigen, d.h. diese tragbare Einheit muss zur Aktivierung bzw. Deaktivierung lediglich von autorisiertem Personal an die Anzeigeeinrichtung gehalten werden. Zu diesem Zweck kann der RFID-Sender einen Schalter aufweisen, um festzulegen, ob das erste oder das zweite drahtlose Signal ausgesendet wird, oder das erste und das zweite drahtlose Signal können identisch sein und die Aktivierungseinrichtung wechselt bei jedem Empfang dieses Signals zwischen der Bereitstellung des Deaktivierungssignals und des ersten Aktivierungssignals. Alternativ wäre es auch möglich, dass die RFID-Leseeinrichtung der Anzeigeeinrichtung mit ihrem Abfragesignal Informationen darüber übermittelt, ob sich die Steuereinrichtung in der ersten Betriebsart oder in der zweiten Betriebsart befindet, und dass der RFID-Sender angepasst ist, um aus dem Abfragesignal die aktuelle Betriebsart zu ermitteln und in Abhängigkeit von der ermittelten Betriebsart das erste oder das zweite drahtlose Signal an die Aktivierungseinrichtung auszusenden, so dass ein Wechsel der Betriebsart stattfindet. Die letzteren beiden Optionen, die auf einen Schalter am RFID-Sender verzichten, sind besonders einfach in der Benutzung.

In einer alternativen bevorzugten Ausführungsform weist die Aktivierungseinrichtung einen Signaleingang zum drahtlosen oder drahtgebundenen Empfang externer Signale auf und ist angepasst, um als Ausgangssignal das jeweils empfangene externe Signal bereitzustellen oder das Deaktivierungssignal bereitzustellen, wenn ein erstes vorbestimmtes externes Signal empfangen wird, und das erste Aktivierungssignal bereitzustellen, wenn ein zweites vorbestimmtes externes Signal empfangen wird. Im ersteren Fall wird das Deaktivierungssignal bzw. das erste Aktivierungssignal bereitgestellt, wenn es als externes Signal empfangen wird, d.h. extern erzeugt und einfach weitergeleitet. Der letztere Fall erlaubt dagegen den Anschluss an eine zentrale oder zugehörige separate Steuerung - beispielsweise über ein AFDX, CAN oder dergleichen oder eine andere Datenleitung die in einer Flugzeugtür vorhanden ist - und damit ggf. die Möglichkeit einer gleichzeitigen Aktivierung bzw. Deaktivierung mehrerer Anzeigeeinrichtungen. Die externen Signale können beispielsweise auch durch eine Codeeingabeeinrichtung erzeugt werden, oder die Codeeingabeeinrichtung kann Teil der Aktivierungseinrichtung sein.

In einer bevorzugten Ausführungsform ist die vorbestimmte Resetoperation der Empfang eines vordefinierten drahtlosen oder drahtgebundenen Resetsignals durch die Anzeigeeinrichtung. Diesbezüglich bestehen genau dieselben Möglichkeiten, wie sie oben für die Aktivierungseinrichtung beschrieben worden sind, d.h. die Resteinrichtung kann einen Empfänger zum Empfang drahtloser Signale aufweisen und insbesondere einen RFID-Empfänger, wobei der Empfänger bzw. RFID-Empfänger derselbe sein kann, wie er oben für die Aktivierungseinrichtung beschrieben worden ist, oder ein Empfänger mit denselben Eigenschaften, oder die Reseteinrichtung kann einen Signaleingang zum drahtlosen oder drahtgebundenen Empfang externer Signale aufweisen, für den dasselbe gilt, wie es für den Signaleingang der Aktivierungseinrichtung beschrieben worden ist.

Die Anzeigeeinrichtung ist als eine zusammenhängende, kompakte Baueinheit ausgebildet, die an einer Tür bzw. einem Türblatt einer Flugzeugtür angeordnet bzw. befestigt werden kann bzw. die in eine Türverkleidung einer Flugzeugtür integrierbar ist. Mit anderen Worten bilden der Sensor, die Signalisierungseinrichtung, die Reseteinrichtung, die Aktivierungseinrichtung und die Steuereinrichtung - und ggf. noch weitere Komponenten - eine derartige zusammenhängende, kompakte Baueinheit aus. Eine solche Anzeigeeinrichtung ist besonders zuverlässig und leicht nachrüstbar, und es sind keine größeren Modifikationen innerhalb des betreffenden Flugzeugs und insbesondere an einer Tür erforderlich.

Die Anzeigeeinrichtung umfasst ferner eine optische Signaleinrichtung zum Abgeben eines optischen Signals - wie z.B. die oben erwähnte optische Signaleinrichtung, die bei oder nach Versetzen der Signalisierungseinrichtung in den zweiten Zustand aktiviert wird - und eine akustische Signaleinrichtung zum Abgeben eines akustischen Signals - wie z.B. die oben erwähnte akustische Signaleinrichtung, die bei oder nach Versetzen der Signalisierungseinrichtung in den zweiten Zustand aktiviert wird-die ebenfalls Teil der Baueinheit sind. Mit anderen Worten bilden sie zusammen mit dem Sensor, der Signalisierungseinrichtung, der Reseteinrichtung, der Aktivierungseinrichtung und der Steuereinrichtung - und ggf. weiteren Komponenten - die zusammenhängende, kompakte Baueinheit aus. Die Steuereinrichtung ist angepasst, um die optische Signaleinrichtung bei Annäherung einer Person unterhalb eines ersten Grenzabstands und die akustische Signaleinrichtung bei Annäherung einer Person unterhalb eines zweiten Grenzabstands zu betreiben, wobei der erste Grenzabstand größer als der zweite Grenzabstand ist. Nähert sich eine Person der Anzeigeeinrichtung, kann diese zunächst ein optisches Signal ausgeben, so dass die Person bereits bei einer recht großen Entfernung, das heißt deutlich mehr als eine Armlänge, bevorzugt höchstens 1,1 m, über diese Annäherung informiert wird, z.B. um - wie weiter unten näher erläutert wird - darauf hinzuweisen, dass eine Notrutsche aktiv ist. Unterschreitet die Person den zweiten Grenzabstand, der beispielsweise unterhalb einer oder eineinhalb Armlängen liegt, bevorzugt maximal 0,5 m, kann zusätzlich ein akustisches Signal abgegeben werden, welches die Person explizit z.B. darauf hinweist, dass beim Betätigen eines an der Tür vorgesehenen Griffs die Notrutsche ausgelöst wird.

Da die Steuereinrichtung angepasst ist, um bei Annäherung einer Person unter den vorbestimmten Grenzabständen die optische Signaleinrichtung und die akustische Signaleinrichtung zu betreiben, kann dies als dritte Betriebsart neben der ersten Betriebsart und der zweiten Betriebsart vorgesehen sein. Die erste Betriebsart ist dann zum Beispiel eine Betriebsart, in der die Anzeigeeinrichtung insgesamt nicht aktiv ist. Ferner kann dabei auch vorgesehen sein, dass die dritte Betriebsart wahlweise zeitgleich mit der zweiten Betriebsart ausgeführt werden kann, d.h. dass in einer kombinierten Betriebsart die Steuereinrichtung angepasst ist, um sowohl bei einer Änderung des Abstands zwischen dem Sensor und einem Objekt die Signalisierungseinrichtung bis zur Vornahme der vorbestimmten Resetoperation in den zweiten Zustand zu versetzen als auch bei Annäherung einer Person unter mindestens einen vorbestimmten Grenzabstand mindestens eine der optischen Signaleinrichtung und der akustischen Signaleinrichtung zu betreiben. Die Steuereinrichtung ist dann bevorzugt ferner so ausgestaltet, dass zwischen allen verfügbaren Betriebsarten gewechselt werden kann, d.h. zwischen der ersten, zweiten und dritten Betriebsart und möglicherweise der kombinierten Betriebsart. Der Wechsel kann in derselben Weise stattfinden, wie er oben für den Wechsel zwischen erster und zweiter Betriebsart beschrieben worden ist. Beispielsweise können noch weitere entsprechende Aktivierungssignale vorgesehen sein, auf die die Steuereinrichtung entsprechend reagiert. Alternativ ist es auch möglich, dass die Steuereinrichtung in der zweiten Betriebsart angepasst ist, um bei Annäherung einer Person unter den vorbestimmten Grenzabständen die optische Signaleinrichtung und die akustische Signaleinrichtung zu betreiben.
Die oben genannten kompakten Baueinheiten können bevorzugt ein Gehäuse mit einem Befestigungsbereich und einer Sichtseite aufweisen. Der Befestigungsbereich ist angepasst, um eine mechanische Verbindung mit der Türverkleidung oder einem Befestigungsmittel an der Flugzeugtür einzugehen. Es ist dabei bevorzugt, wenn das Gehäuse zumindest teilweise in einem die optische Signaleinrichtung beherbergenden Abschnitt transparent ist. Die Gehäuseform muss sich daher nicht von der einer herkömmlichen Warnlampe unterscheiden und die darin integrierten Komponenten sind vor äußeren Einwirkungen weitgehend geschützt, wobei die Sichtbarkeit der optischen Signaleinrichtung gewährleistet bleibt.

Die Anzeigeeinrichtung ist in vorteilhafter Weise insbesondere auch zum Anzeigen eines Aktivierungsstatus einer Notrutsche in einem Flugzeug geeignet und angepasst.

In größeren Passagierflugzeugen sind Flugzeugtüren mit einer Notrutschenauslöseeinrichtung koppelbar, so dass beim Öffnen der betreffenden Flugzeugtür eine daran angeordnete Notrutsche ausgelöst wird. Vor Abflug wird hierzu bei geschlossenen Türen ein Notrutschenentsicherungshebel in einen "armed"-Modus umgelegt. Nach normaler Landung wird der Notrutschenentsicherungshebel in einen "disarmed"-Modus umgelegt, so dass eine Kopplung mit der Notrutschenauslöseeinrichtung aufgehoben wird und die Flugzeugtüren normal zu öffnen sind.

Die Stellung des Notrutschenentsicherungshebels ist optisch eindeutig erkennbar. Zusätzlich kann eine Warnleuchte in oder an der Flugzeugtür installiert sein, die eine optische Anzeige des Zustands der Notrutschenaktivierung ermöglicht. Dennoch kann es aufgrund von Zeitdruck und unvorhergesehenen Situationen an Bord des Flugzeugs gelegentlich passieren, dass nach erfolgter Landung der Notrutschenaktivierungshebel in dem "armed"-Zustand belassen wird und beim Öffnen einer Flugzeugtür eine Notrutsche versehentlich ausgelöst wird, was zu Schäden in der Nähe des Flugzeugs und zu hohen Folgekosten und unbestimmten Stillstandszeiten des Flugzeuges aufgrund der notwendigen Re-Integration der Notrutsche führt. Dies ist unabhängig vom Türaufbau und dem Flugzeughersteller. Es existieren Lösungen, die unbeabsichtigte Auslösung von Notrutschen zu verhindern, beispielsweise durch Einrichtungen, die eine Berührung eines Bauteils einer Flugzeugtür durch eine Person detektieren und eine optische und/oder akustische Warnung abgeben, wenn sich eine Person der Tür nähert oder den Griff berührt, wenn die Notrutschenauslöseeinrichtung mit der Flugzeug gekoppelt ist. Eine solche Lösung kann jedoch eine Modifikation der Flugzeugtür erfordern.

Es ist daher in Zusammenhang mit Notrutschen wünschenswert, eine wirkungsvolle Einrichtung zum Anzeigen eines Aktivierungsstatus einer und zum Verhindern einer unbeabsichtigten Auslösung einer Notrutsche bereitzustellen, die besonders zuverlässig und leicht nachrüstbar ist, wobei möglichst keine größeren Modifikationen innerhalb des betreffenden Flugzeugs und insbesondere an einer Tür erforderlich sind. Dieses Ziel wird durch die obigen Ausführungsformen erreicht.

Die optische Signaleinrichtung dient dann zum Erzeugen eines optisch wahrnehmbaren Signals, das einer Person anzeigt, dass beim Öffnen einer Tür des Flugzeugs eine Notrutsche ausgelöst wird. Zum Erzeugen dieses Signals können - wie bei jeder der oben erwähnten optischen Signaleinrichtungen - beliebige Anzeigeeinrichtungen Verwendung finden, die insbesondere selektiv ein Lichtsignal generieren, beispielsweise durch eine Leuchteinrichtung auf Basis einer Glühlampe, einer LED oder einer Mehrzahl hiervon. Die Leuchteinrichtung kann dafür eingerichtet sein, ein kontinuierliches Licht oder ein Blinklicht abzugeben, wobei die optische Wahrnehmbarkeit eines Blinklichts diejenige eines kontinuierlichen Lichts übertreffen kann.
Die akustische Signaleinrichtung kann analog hierzu - genau wie jede der oben erwähnten akustischen Signaleinrichtungen - eine Tonerzeugungseinheit aufweisen, mit der ein akustisch wahrnehmbares Signal erzeugt werden kann. Die Tonerzeugungseinrichtung kann für diesen Zweck einen elektromagnetisch oder piezoelektrisch betreibbaren Lautsprecher oder Summer aufweisen und, falls erforderlich bzw. gewünscht, eine Einrichtung zum selektiven Abgeben einer Signalfolge zum Wiedergeben eines aufgezeichneten oder synthetischen Klangs.

Der Sensor ist in diesen Ausführungsformen ferner in der Lage, eine Annäherung einer Person an den Sensor und somit an die ihn beherbergende Anzeigeeinrichtung festzustellen, so dass Kenntnis darüber erlangt werden kann, ob und/oder in welcher Entfernung sich eine Person vor dem Sensor befindet. Basierend auf von dem Sensor ermittelten Informationen ist die damit gekoppelte Steuereinrichtung in der Lage, selektiv die optische Signaleinrichtung und die akustische Signaleinrichtung zu betreiben. Konkret bedeutet dies, dass die Steuereinrichtung basierend auf der Entfernung einer Person von dem Sensor bzw. der Anzeigeeinrichtung ein optisches und/oder akustisches Warnsignal abgeben kann, durch das die Person darauf hingewiesen wird, dass beim Öffnen der Tür mit einer Auslösung der Notrutsche zu rechnen ist. Darüber hinaus ist die Anzeigevorrichtung bevorzugt so konfiguriert und ausgestaltet, dass wie bei herkömmlichen Warnleuchten durch die optische Signaleinrichtung ein Dauerlicht bzw. durch die akustische Signaleinrichtung ein Dauerwarnton erzeugt wird, sobald der Türöffnungshebel bei scharfer Notrutsche eine vorbestimmte Strecke in Richtung Tür-Öffnen bewegt wird. Zu diesem Zweck ist die Steuereinrichtung mit einem externen Detektor zur Detektion der Stellung des Türöffnungshebels verbunden.

Durch die Ausführung der Anzeigeeinrichtung als eine kompakte Baueinheit, welche in eine Türverkleidung des Flugzeugs integrierbar ist oder an einer Flugzeugtür angeordnet bzw. befestigt werden kann, kann folglich ohne Weiteres eine herkömmliche Warnlampe für eine Notrutschenaktivierung durch die erfindungsgemäße Anzeigeeinrichtung ersetzt werden. Die Anzeigeeinrichtung ist bevorzugt derart zu gestalten, dass sie zumindest in einem für die Befestigung notwendigen Bereich wie eine herkömmliche Warnleuchte gestaltet ist, so dass die Türverkleidung und ein entsprechender Ausschnitt oder ein daran angeordnetes Befestigungsmittel nicht modifiziert werden müssen. Die erfindungsgemäße Anzeigeeinrichtung weist somit ein sehr großes Potenzial für eine Nachrüstlösung (Retrofit) auf, denn es müsste lediglich eine herkömmliche Warnleuchte durch die erfindungsgemäße Anzeigeeinrichtung ersetzt werden.

Bei den obigen Ausführungsformen, ist es ferner bevorzugt, wenn die Steuereinrichtung mindestens einen Aktivierungssignaleingang aufweist und ist dazu eingerichtet, basierend auf einem über den Aktivierungssignaleingang empfangbaren zweiten Aktivierungssignal den Betrieb der optischen Signaleinrichtung und der akustischen Signaleinrichtung zu aktivieren oder zu unterbrechen. Die Steuereinrichtung kann auf diese Weise den Betrieb der optischen Signaleinrichtung und der akustischen Signaleinrichtung von dem Landezustand des Flugzeugs und/oder der Stellung eines an der betreffenden Tür befindlichen Notrutschenaktivierungshebels abhängig machen. Dies hat den Vorteil, dass eine entsprechende Überwachung lediglich bei gelandetem Flugzeug und in einer bestimmten Position stehendem Notrutschenaktivierungshebel vorgenommen wird, wenn die Gefahr besteht, dass ohne Deaktivierung des Notrutschenaktivierungshebels die Tür geöffnet wird. Bei regulärem Flugbetrieb hingegen kann auf eine Überwachung verzichtet werden, denn dort besteht nicht die Gefahr, dass eine Tür geöffnet wird. Ein zweites Aktivierungssignal, das von dem Landezustand des Flugzeugs abhängt, kann bei am Boden befindlichem Flugzeug von einer separaten Einrichtung generiert und an den Aktivierungssignaleingang übertragen werden. Ein weiteres zweites Aktivierungssignal, welches von der Stellung des Notrutschenaktivierungshebels abhängt, kann durch einen weiteren Sensor generiert werden, der in oder an dem Notrutschenaktivierungshebel angeordnet ist, die Stellung des Notrutschenaktivierungshebels überwacht und ein entsprechendes Signal an den mindestens einen Aktivierungssignaleingang überträgt. Dabei kann ein bereits am Notrutschenaktivierungshebel vorhandener Sensor verwendet werden, sofern sein Ausgangssignal für die Anzeigeeinrichtung nutzbar ist, oder durch einen dedizierten separaten, z.B. nachgerüsteten, Sensor. Es können auch mehrere unterschiedliche zweite Aktivierungssignale kombiniert werden, z.B. ein zweites Aktivierungssignal, das für den Landezustand kennzeichnend ist, und ein zweites Aktivierungssignal, das für die Stellung des Notrutschenaktivierungshebels kennzeichnend ist.

Ein zweites Aktivierungssignal, welches von dem Landezustand des Flugzeugs abhängt, kann von einem zentralen, bereits vorhandenen System des Flugzeugs generiert und ausgesendet werden. Es bietet sich in diesen Fällen an, die erfindungsgemäße Anzeigeeinrichtung hierfür über einen entsprechenden Bus oder ein Netzwerk mit dieser zentralen Einrichtung zu verbinden, beispielsweise über ein AFDX, CAN oder dergleichen. Es ist aber auch möglich, die Anzeigeeinrichtung an eine Quelle für diskrete bzw. logische Signale anzuschließen. Voraussetzung hierfür ist in allen Fällen, dass eine entsprechende Datenleitung bzw. Einzelleitung in der Tür vorhanden ist oder darin nachträglich integriert wird. Dafür könnte jedoch auch eine drahtlose Verbindungseinrichtung oder ein auf Basis der in die Tür reichenden Stromleitung realisiertes Datenübertragungssystem verwendet werden.

In einer weiteren Ausführungsform, weist die Anzeigeeinrichtung ferner eine mit der Steuereinrichtung gekoppelte Beschleunigungsmesseinheit mit einem G-Sensor, d.h. einem Akzelerometer bzw. einem Beschleunigungssensor, und/oder Inertialmesseinheit mit mindestens einem Inertialsensor zum kontinuierlichen oder periodischen Erfassen mindestens einer gerichteten Beschleunigung auf, wobei die Steuereinrichtung dazu eingerichtet ist, aus der erfassten mindestens einen gerichteten Beschleunigung festzustellen, ob sich das Flugzeug am Boden befindet. Ein G-Sensor kann dabei bevorzugt die Beschleunigung entlang dreier Raumachsen messen und basiert bevorzugt auf MEMS-Technologie. Ein Inertialsensor könnte sowohl eine Beschleunigung entlang einer von drei Raumachsen als auch eine Drehbeschleunigung um eine von drei Raumachsen erfassen. Durch Verwendung eines G-Sensors und/oder mindestens eines Inertialsensors kann die Bewegung des Flugzeugs verfolgt werden, um hieraus schlusszufolgern, ob sich das Flugzeug am Boden oder im Flug befindet. Hierzu können verschiedene unterschiedliche Verfahren zum Einsatz kommen. Beispielsweise kann durch kontinuierliches Mitverfolgen der Bewegungen des Flugzeugs ein Flugprofil erfasst werden, welches aus einer Steigphase, einem Reiseflug mit einer oder mehreren Reiseflughöhen, einer Sinkphase und einer anschließenden Rollphase besteht, in der das Flugzeug stark abgebremst wird und eine Beschleunigung in Hochrichtung vernachlässigbar ist. Es wäre auch möglich, lediglich einen charakteristischen Landestoß festzustellen, der auf eine Sinkphase folgt, eine deutliche Verzögerung in Längsrichtung des Flugzeugs und/oder den obligatorischen Abbiegevorgang zu detektieren, der nach jeder Landung bei dem Wechsel von Landebahn zu Taxiway erfolgt. Die unterschiedlichen Verfahren können unterschiedliche Anordnungen mit unterschiedlich ausgestalteten G-Sensoren oder einer unterschiedlichen Anzahl von Inertialsensoren erfordern, bei der Feststellung eines Landestoßes könnte etwa ein G-Sensor bzw. ein einzelner Inertialsensor ausreichen, der die Beschleunigung entlang der Hochachse des Flugzeugs erfasst. Allerdings bietet es sich besonders an, kommerziell erhältliche und bevorzugt standardisierte Drei- bzw. Sechs-Achs-Sensoren einzusetzen, die sowohl statische Lagen, als auch dynamische Lageänderungen erfassen können und etwa mit je einem Drei-Achs-Drehraten- und Drei-Achs-Beschleunigungssensor auf einem Chip realisiert sind. Die Feststellung, ob sich das Flugzeug am Boden befindet, geht folglich von der erfindungsgemäßen Anzeigeeinrichtung selbst aus. Eine möglicherweise in der Tür bzw. Türverkleidung nicht vorhandene Anbindung an einen Bus oder ein Netzwerk muss folglich nicht nachgerüstet werden, so dass die erfindungsgemäße Anzeigeeinrichtung sehr flexibel für unterschiedlichste Flugzeugtypen und Flugzeugtüren einsetzbar ist.

Dabei ist es weiter vorteilhaft, je nach Rumpfseite der entsprechenden Flugzeugtür die Anzeigeeinrichtung und/oder die Beschleunigungsmesseinheit und/oder Inertialmesseinheit mit einer Einrichtung zum Vorgeben einer Flugrichtung auszustatten, d.h. auf einer rechten oder linken Rumpfseite. Es bietet sich an, die erfindungsgemäße Anzeigeeinrichtung als stets gleiches Bauteil auszugestalten, das in viele verschiedene Flugzeugtüren integrierbar ist. Die in der Anzeigeeinrichtung integrierte Beschleunigungsmesseinheit und/oder Inertialmesseinheit kann demnach auf zwei unterschiedliche Arten zur Flugrichtung ausgerichtet werden. Die Installationsseite der Anzeigeeinrichtung muss daher zur Flugrichtung bekannt sein, um mit den von der Beschleunigungsmesseinheit und/oder Inertialmesseinheit gelieferten Signalen den Landezustand des Flugzeugs zuverlässig identifizieren zu können. Neben der Einstellung "ab Werk" durch entsprechende Firmware in der Steuereinrichtung kann sich auch anbieten, mit Hilfe von überbrückbaren Pins, d.h. einer Pin-Programmierung, an der Steuereinrichtung bei Installation der Anzeigeeinrichtung vorzugeben.

Die Anzeigeeinrichtung weist bevorzugt ein Gehäuse mit einem Befestigungsbereich und einer Sichtseite auf. Der Befestigungsbereich ist dazu eingerichtet, eine mechanische Verbindung mit der Türverkleidung oder einem Befestigungsmittel an der Flugzeugtür einzugehen. Der Sensor und ggf. eine oder mehrere der oben erwähnten optischen Signaleinrichtungen erstrecken sich zumindest teilweise zu der Sichtseite hin. Das Anordnen der optischen Signaleinrichtung oder optischen Signaleinrichtungen in einem der Sichtseite nahegelegenen Bereich erlaubt eine ungestörte Wahrnehmung des jeweiligen erzeugten und abgegebenen optischen Signals. Der Sensor ist zudem bevorzugt in einem sichtseitennahen Bereich angeordnet, um ein ungestörtes Überwachen eines vor der Anzeigeeinrichtung und somit vor der Tür bzw. Türverkleidung im Innenraum des Flugzeugs gelegenen Erfassungs- bzw. Überwachungsbereichs zu ermöglichen. Dieser Erfassungsbereich wird als ein vor der Flugzeugtür liegender räumlicher Abschnitt oder als ein Flächenbereich eines vor der Tür bzw. Türverkleidung befindlichen Fußbodens durch Auswahl und Feineinstellung des Sensors definiert und erstreckt sich in den Innenraum des Flugzeugs, das heißt einem von der Türinnenseite bzw. Türverkleidung abgewandten Bereich. Um eine ungestörte Wahrnehmung des optischen Signals einer optischen Signaleinrichtung und ein ungestörtes Überwachen zu erlauben, können der Sensor und die jeweilige optische Signaleinrichtung nebeneinander oder übereinander an der Sichtseite angeordnet sein.

Nach der vorliegenden Erfindung ist ferner eine Türanordnung für ein Flugzeug vorgesehen, die ein Türblatt mit einer ersten Seite und einer gegenüberliegenden zweiten Seite aufweist, das angepasst ist, um in der Weise in einer Öffnung in einem Rumpf eines Flugzeugs montiert zu werden, dass es zwischen einer geschlossenen Position, in der es die Öffnung schließt und die erste Seite einem Innenraum des Flugzeugs zugewandt ist und die zweite Seite nach außen weist, und einer geöffneten Position bewegbar ist, in der die Öffnung zugänglich ist. Die Türanordnung weist ferner eine Anzeigeeinrichtung gemäß einer der oben erläuterten Ausführungsformen auf, wobei der Sensor an dem Türblatt angeordnet ist, z.B. indem sie in oder an einer Türverkleidung befestigt oder integriert ist.

Nach der vorliegenden Erfindung ist ferner ein Flugzeug vorgesehen, das einen Rumpf, in dem eine Öffnung ausgebildet ist, und ein Türblatt mit einer ersten Seite und einer gegenüberliegenden zweiten Seite aufweist. Das Türblatt ist angepasst, um in der Weise in der Öffnung montiert zu werden, dass es zwischen einer geschlossenen Position, in der es die Öffnung schließt und die erste Seite einem Innenraum des Flugzeugs zugewandt ist und die zweite Seite nach außen weist, und einer geöffneten Position bewegbar ist, in der die Öffnung zugänglich ist. Außerdem weist das Flugzeug eine stationäre Komponente, wie zum Beispiel einen Boden, einen Wandabschnitt, einen Abschnitt einer Bordküche oder einen Abschnitt eines Monuments, im Innenraum des Flugzeugs auf. Die stationäre Komponente ist von dem Türblatt beabstandet. Schließlich weist das Flugzeug auch eine Anzeigeeinrichtung gemäß einer der oben erläuterten Ausführungsformen auf. Der Sensor ist an dem Türblatt, wie es oben in Bezug auf die Türanordnung erläutert worden ist, oder an der stationären Komponente in der Weise angeordnet, dass sich die stationäre Komponente bzw. das Türblatt im Erfassungsbereich des Sensors befindet und ein Öffnen des Türblatts eine Änderung des Abstands des Sensors von der stationären Komponente bzw. dem Türblatt bewirkt.

Im Folgenden wird ein Ausführungsbeispiel der Erfindung unter Bezugnahme auf die beigefügten Zeichnungen näher erläutert.
Figur 1 zeigt eine erfindungsgemäße Anzeigeeinrichtung in einer dreidimensionalen Ansicht.
Figur 2 zeigt eine mögliche Einbauposition der Anzeigeeinrichtung.
Figur 3 stellt die Anzeigeeinrichtung in einer Vier-SeitenAnsicht dar.
Figur 4 zeigt die Anzeigeeinrichtung in einer teilzerlegten Darstellung.
Figur 5 zeigt mögliche Schallkeulen eines Ultraschallsensors der Anzeigeeinrichtung.
Figur 6 zeigt eine mit der Anzeigevorrichtung ausgestattete Flugzeugtür während eines Öffnungsvorgangs.
Figur 7 zeigt eine vor der Flugzeugtür befindliche Person und eine ausgelösten Anzeige.
Figur 8 zeigt die Anzeigeeinrichtung in einer schematischen, blockbasierten Darstellung.

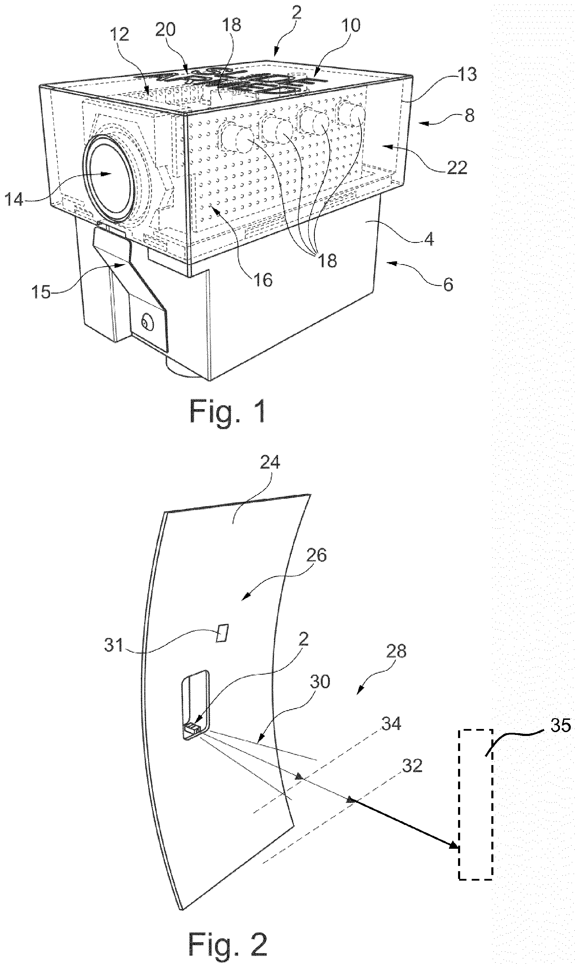

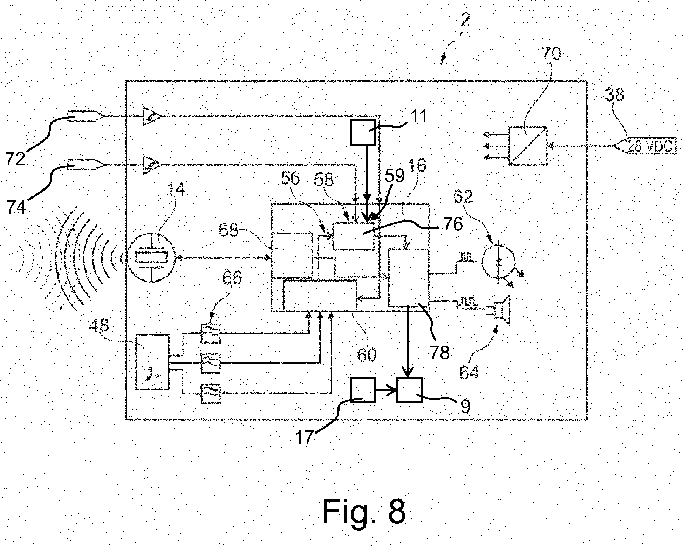

Figur 1 zeigt eine erfindungsgemäße Anzeigeeinrichtung 2, welche ein Gehäuse 4 mit einem Befestigungsbereich 6 und einer Sichtseite 8 aufweist. In der Anzeigeeinrichtung 2 ist eine in Figur 1 verdeckte Signalisierungseinrichtung in Form eines nicht-volatilen elektronischen Speichers 9 (siehe Figur 8), eine optische Signaleinrichtung 10, die exemplarisch mehrere Leuchteinrichtungen 18 aufweist, eine in Figur 1 verdeckte Aktivierungseinrichtung in Form eines RFID-Lesegeräts 11 (siehe Figur 8), eine in Figur 1 verdeckte und mit dem Speicher 9 verbundene Resteinrichtung in Form eines weiteren RFID-Lesegeräts 17 (siehe Figur 8), eine in Figur 1 verdeckte akustische Signaleinrichtung 12 und ein Sensor 14 zum Erfassen des Abstands eines Objekts von der Anzeigeeinrichtung 2 angeordnet. Beispielhaft sind die optische Signaleinrichtung 10 und der Sensor 14 unter- bzw. nebeneinander, d.h. entlang einer Raumachse aufeinander folgend, an der Sichtseite 8 angeordnet, während die akustische Signaleinrichtung 12 beispielhaft im Innern der Anzeigeeinrichtung 2 von der Sichtseite 8 abgewandt positioniert ist. Der Befestigungsbereich 6 kann weiterhin elastische Halteklammern 15 aufweisen, die bei Einführung des Befestigungsbereichs 6 in eine entsprechende Öffnung einer Türverkleidung mit dieser eine form- und/oder kraftschlüssige Verbindung eingehen.

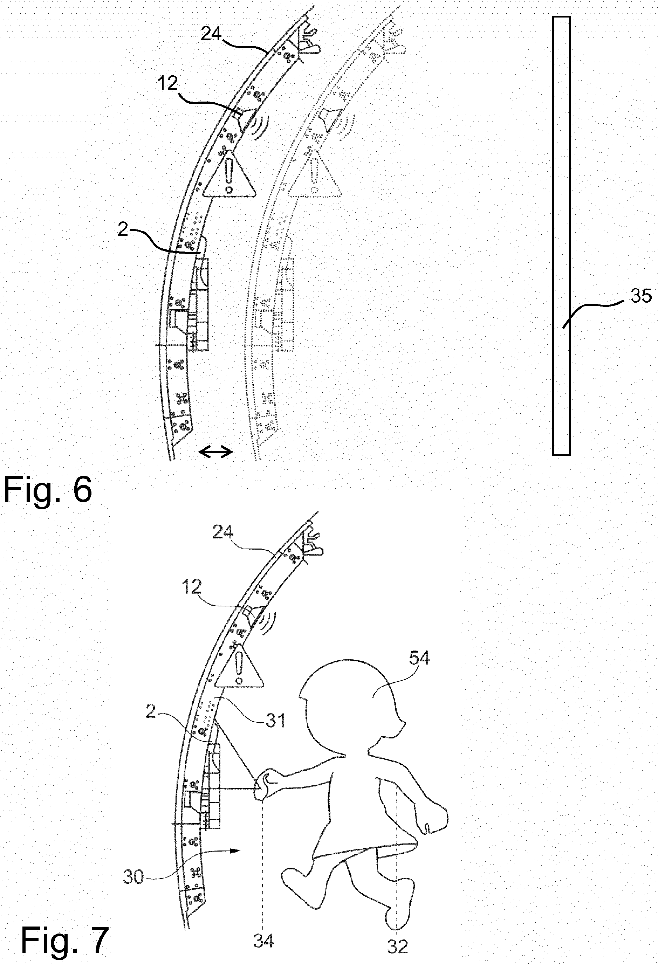

Eine weiterhin in der Anzeigeeinrichtung 2 angeordnete Steuereinrichtung in Form einer Elektronikeinheit 16, von der in dieser Darstellung insbesondere eine Platine erkennbar ist, ist mit dem Speicher 9, der optischen Signaleinrichtung 10, der Aktivierungseinrichtung 11, der akustischen Signaleinrichtung 12 und dem Sensor 14 verbunden und dazu eingerichtet, auf Basis eines erfassten Abstandes eines Objekts zu der Anzeigeeinrichtung 2 bzw. dem Sensor 14, in einer ersten Warnbetriebsart selektiv die optische Anzeigeeinrichtung 10 und die akustische Signaleinrichtung 12 zu betreiben und in einer zweiten Überwachungsbetriebsart einen Hinweis auf eine Änderung des Abstands in dem Speicher 9 zu speichern. Dies kann in der Warnbetriebsart beispielsweise durch Definieren mindestens eines in Figur 2 gezeigten Grenzabstands 32, 34 erreicht werden, den ein Objekt höchstens erreichen darf, so dass die optische Signaleinrichtung 10 bzw. die akustische Signaleinrichtung 12 betrieben werden. In der Überwachungsbetriebsart kann dies - wie weiter unten unter Bezugnahme auf die Figuren 2 und 6 erläutert werden wird - durch Definieren eines Betrags erreicht werden, um den sich der Abstand zu einem definierten Objekt höchstens ändern darf, bevor der Hinweis in dem Speicher 9 gespeichert wird.

Zum Wechsel zwischen den beiden Betriebsarten ist die Aktivierungseinrichtung 11 vorgesehen, die in dem Beispiel als RFID-Lesegerät ausgebildet ist. Sie ist so ausgestaltet und konfiguriert, dass sie in regelmäßigen Abständen ein drahtloses Abfragesignal mit einem ihr zugewiesenen Code aussendet und dass sie auf ein bestimmtes drahtloses Antwortsignal reagiert, das sie von einem passiven, durch das Abfragesignal mit Energie versorgten RFID-Etikett empfängt. Dieses RFID-Etikett, das zusammen mit der Anzeigeeinrichtung 2 ein System bildet, ist mit der Aktivierungseinrichtung 11 gepaart, d.h. so konfiguriert, dass es auf ein Abfragesignal mit dem Code der Aktivierungseinrichtung 11 mit der Aussendung eines Antwortsignals mit einem dem RFID-Etikett zugewiesenen Code reagiert. Die Aktivierungseinrichtung 11 untersucht das Antwortsignal daraufhin, ob es den Code des mit ihr gepaarten RFID-Etiketts enthält. Nur wenn dies der Fall ist, führt sie einen Wechsel der Betriebsart der Elektronikeinheit 16 herbei, indem sie ein erstes Aktivierungssignal als Ausgangssignal an einen Aktivierungssignaleingang 59 der Elektronikeinheit 16 sendet, wenn sie diese in der Warnbetriebsart befindet, und ein Deaktivierungssignal sendet, wenn sich die Elektronikeinheit 16 in der Überwachungsbetriebsart befindet (siehe Figur 8).

Die Elektronikeinheit 16 kann einen oder mehrere weitere Aktivierungssignaleingänge 56, 58 aufweisen, an den bzw. an die ein Aktivierungssignal gesendet werden kann. Dieses wird dazu eingesetzt, die Initiierung des Betriebs der optischen Signaleinrichtung 10 und der akustischen Signaleinrichtung 12 nur dann vorzunehmen, sobald sich das Flugzeug am Boden befindet und jederzeit die zugehörige Flugzeugtür geöffnet werden kann, d.h. die Warnbetriebsart nur in diesem Fall zu aktivieren.

Die optische Signaleinrichtung 10 ist in dem gezeigten Ausführungsbeispiel nur durch eine transparente Abdeckung 13 von der Sichtseite 8 getrennt oder in einem darin befindlichen Ausschnitt angeordnet, so dass eine uneingeschränkte Sichtbarkeit der optischen Signaleinrichtung 10, d.h. der Leuchteinrichtungen 18, erlaubt wird, die für eine Erzeugung eines ausreichend hellen Lichts, gepulst oder kontinuierlich, geeignet sind. Zudem weist die optische Signaleinrichtung 10 exemplarisch einen Schriftzug 20 auf ("Slide Armed"), der als einzige nicht lichtdurchlässige Fläche der optischen Signaleinrichtung 10 ausgeführt ist. Alternativ dazu kann der Schriftzug 20 auch als einzige Lichtdurchtrittsfläche der optischen Signaleinrichtung 10 realisiert werden.

Der Sensor 14 ist beispielhaft ein Ultraschallsensor, welcher periodisch Ultraschallsignale aussendet und aus der zeitlichen Differenz zwischen den ausgesandten Schallwellen und empfangenen Schallreflexionen die Entfernung zu dem betreffenden, vor dem Sensor befindlichen, Objekt bestimmt. Alternativ dazu können auch andere Arten von Sensoren eingesetzt werden, beispielhaft optische, kamerabasierte oder Radar-basierende Sensoren.

Die Anzeigeeinrichtung 2 ist als eine sehr kompakte Baueinheit ausgeführt, die anstelle einer üblichen Warnleuchte in einer Türverkleidung oder dergleichen einsetzbar ist. Wie vorangehend angedeutet bietet es sich an, um eine übermäßige Auslösung von Warnsignalen optischer oder akustischer Natur zu vermeiden, die optische Signaleinrichtung 10 und/oder die akustische Signaleinrichtung 12 nur dann zu betreiben, wenn sich das Flugzeug am Boden befindet und eine Öffnung der Flugzeugtür bevorsteht. Besonders einfach kann dies durch Empfangen eines Aktivierungssignals am Aktivierungssignaleingang 56, 58 realisiert werden, wozu jedoch eine Datenleitung oder eine Einzelleitung mit einem logischen Signal zu einer zentralen Einheit an Bord des Flugzeugs notwendig ist.

In der gezeigten Ausführung der Anzeigeeinrichtung 2 ist eine hier verdeckte Beschleunigungsmesseinrichtung oder Trägheitsmesseinrichtung (Trägheitsplattform bzw. IMU) 22 (bzw. 48 in Figur 8) integriert, die dazu eingerichtet ist, die räumlichen Bewegungen des Flugzeugs zu erfassen und an die Elektronikeinheit 16 zu übertragen. Das Landen eines Flugzeugs kann durch prägnante Ereignisse festgestellt werden, beispielsweise einen Landestoß nach einem kontinuierlichen Sinkflug. Ist dieses Ereignis eingetreten, kann die Elektronikeinheit 16 die Annäherungsdetektion und dadurch gesteuerte optische bzw. akustische Warnungen vornehmen.

Figur 2 zeigt beispielhaft eine Flugzeugtür 24 mit einer Türverkleidung 26, die zu dem Innern des Flugzeugrumpfes gewandt ist. Befindet sich das Flugzeug auf einer Rollbahn oder in einer Parkposition, wird die Tür 24 von der Innenseite des Flugzeugs geöffnet. Die Anzeigeeinrichtung 2 ist an oder in die Türverkleidung 26 integriert, wobei die Sichtseite 8 in das Innere des Flugzeugs gewandt ist.

Befindet sich folglich eine Person vor der Tür 24, ist diese in dem Erfassungsbereich des Sensors 14. Wie angedeutet, überwacht der Sensor 14 einen Raum 28 an der Innenseite des Flugzeugs und definiert dort einen Erfassungsbereich 30. Beispielsweise kann die Elektronikeinheit 16 einen ersten Grenzabstand 32 sowie einen zweiten Grenzabstand 34 definieren, wobei die Elektronikeinheit 16 die optische Signaleinrichtung 10 betreibt, sobald eine Person den ersten Grenzabstand 32 unterschreitet und wobei die akustische Signaleinrichtung 12 betrieben wird, sobald eine Person den zweiten Grenzabstand 34 unterschreitet. Für den ersten Grenzabstand 32 bietet es sich an, einen Abstand von höchstens 1,1 m und bevorzugt 0,9 m vorzusehen. Für den zweiten Grenzabstand 34 bietet sich ein Abstand von höchstens 0,5 m und bevorzugt 0,35 m an.

Befindet sich eine Person zwischen den beiden die Grenzabstände 32 und 34 andeutenden Linien, wird sie lediglich optisch, beispielsweise durch ein blinkendes Licht, auf die noch aktivierte Notrutsche aufmerksam gemacht. Nähert sich die Person weiter der Tür 24, folgt zusätzlich eine akustische Signalisierung, wenn der Abstand zu der Tür 24 in der Nähe einer Armlänge ist. Selbstverständlich können die beiden Grenzabstände 32 und 34 auch gleich sein, so dass eine optische und akustische Signalisierung gleichzeitig erfolgt. Schließlich ist bevorzugt vorgesehen, dass die Elektronikeinheit 16 die optische Signaleinrichtung 10 und die akustische Signaleinrichtung 12 betreibt, um ein Dauerlicht bzw. einen Dauerwarnton abzugeben, wenn der Türöffnungshebel eine vorbestimmte Strecke in Richtung Tür-Öffnen bewegt wird, während die Notrutsche aktiviert ist. Dazu ist die Elektronikeinheit 16 bevorzugt über einen weiteren Eingang mit einem Sensor verbunden, der die Stellung des Türöffnungshebels überwacht.

Ferner ist der Erfassungsbereich 30 des Sensors 14 so gewählt und ausgerichtet, dass er sich bei geschlossener Tür 24 eine stationäre Komponente 35 des Flugzeugs, wie zum Beispiel eine Wand eine Bordküche, in dem Erfassungsbereich 30 in einem definierten Abstand vom Sensor 14 befindet. Wenn sich die Elektronikeinheit 16 bei geschlossener Tür 24 in ihrer Überwachungsbetriebsart befindet, überwacht sie, ob sich der definierte Abstand um mehr als ein vordefinierter Grenzbetrag ändert. Sobald dies der Fall ist, ist es ein Hinweis auf eine Öffnung der Tür, die, wie aus Figur 6 ersichtlich ist, zu einer Vergrößerung des Abstands zwischen der Tür 24 und der stationären Komponente 35 führt. Dann wird durch die Elektronikeinheit ein Steuersignal an den Speicher 9 ausgegeben, das eine Speicherung eines ersten vorbestimmten Wertes in einer vorbestimmten Speicherstelle des Speichers 9 bewirkt. Dieser Wert zeigt an, dass ein Öffnen der Tür 24 stattgefunden hat, und kann nur durch die Reseteinrichtung 17 zurückgesetzt werden, die weiter untern unter Bezugnahme auf Figur 8 beschrieben wird. Wie oben erläutert worden ist, kann die Speicherung des ersten vorbestimmten Wertes auch dadurch bewirkt werden, dass sich eine nicht autorisierte Person auf anderem Wege Zutritt zum Flugzeug verschafft hat und sich durch den Erfassungsbereich 30 des Sensors 14 bewegt.

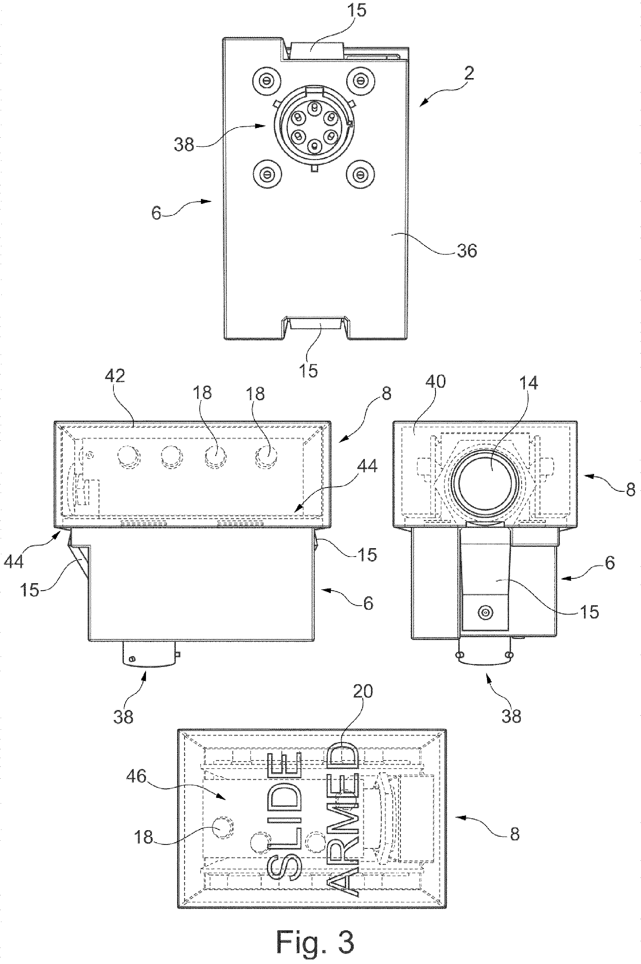

Figur 3 zeigt eine Vier-Seiten-Darstellung der Anzeigeeinrichtung 2, in der eine Unterseite 36 mit einem elektrischen Anschluss 38 gezeigt wird, der mit einer Stromversorgung der Tür 24 zu verbinden ist und weiterhin mit einem nicht dargestellten Sensor gekoppelt ist, der den Notrutschenaktivierungshebel 31 überwacht, und der auch, abhängig vom Flugzeugtyp, als abgehende Kabelpeitsche mit endseitig angeschlossenem Verbindungsstecker ausgeführt sein kann. Sowohl kann dies über ein Aktivierungssignal, das von der Stellung des Notrutschenaktivierungshebels 31 abhängt, als auch über eine von der Stellung des Notrutschenaktivierungshebels 31 abhängige Stromversorgung realisiert werden.

Ein schmales Ende 40 des Sichtbereichs 8 weist hauptsächlich den Sensor 14 auf, welcher bei in Figur 2 gezeigter Installation direkt in das Innere des Flugzeugrumpfs gerichtet ist. An einer Seitenwandung 42 sind die Leuchteinrichtungen 18 erkennbar, welche entlang der Seitenwandung 42 im Innern der Abdeckung 13 verteilt sind. Der Befestigungsbereich 6 ist schmaler als der Sichtbereich 8 gestaltet, so dass bei in einer Öffnung eingeschnappter Anzeigeeinrichtung 2 eine zu dem Befestigungsbereich 6 gewandte Kante 44 auf einem Rand der betreffenden Öffnung aufliegen kann und die Halteklammern 15 einen bündigen Kontakt der Kante 44 mit dem Rand der betreffenden Öffnung begünstigen.

Der Schriftzug 20 ist auf einer Oberseite 46 angeordnet und nimmt dort im Wesentlichen die zur Verfügung stehende Breite der Abdeckung 13 ein. Durch die Transparenz der Abdeckung 13sind weitere Leuchteinrichtungen 18 erkennbar, die den Schriftzug 20 hinterleuchten.

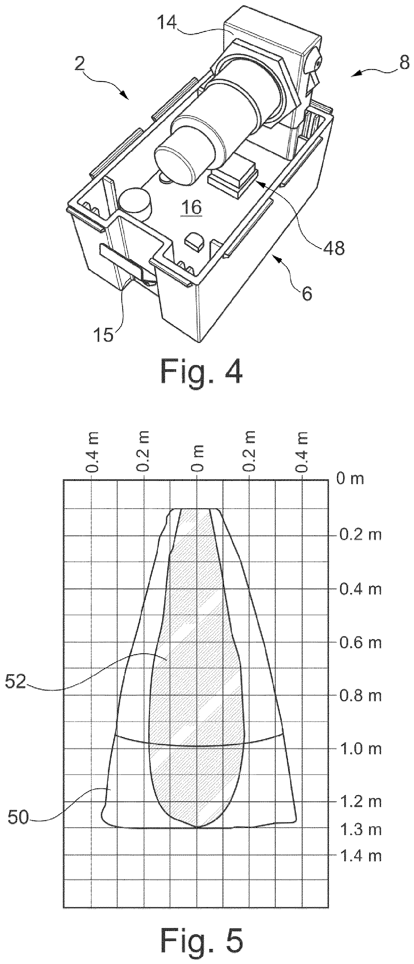

Figur 4 zeigt die Anzeigeeinrichtung 2 ferner in einer teilzerlegten Anordnung, wobei hier eine in der Elektronikeinheit 16 integrierte Beschleunigungsmesseinheit 48 erkennbar ist, die die Bewegung der Anzeigeeinrichtung 2 und damit des Flugzeugs erfassen kann. Durch Auswerten prägnanter Ereignisse, wie etwa eines Landestoßes und einer daraufhin erfolgten starken Verringerung der Längsgeschwindigkeit durch Bremsen kann eindeutig festgestellt werden, dass sich das Flugzeug am Boden befindet. Dieses Ereignis kann ein Aktivierungssignal auslösen, welches die Aktivierung der Annäherungsdetektion in dem Bereich vor der Tür 24 initiiert.

Ein Diagramm in Figur 5 zeigt ferner zwei bevorzugte Schallkeulen 50 und 52 des Ultraschallsensors 14, wobei die Schallkeule 50 zu einem Ultraschallsensor mit ausgerichteter Platte und die Schallkeule 52 zu einem Ultraschallsensor mit einem Rohr mit Durchmesser von beispielsweise 27 mm gehören. Für die präzise Erkennung einer Person direkt vor dem Ultraschallsensor, die auf die Tür 24 zuschreitet, und für die präzise Erkennung einer Abstandsänderung zu der stationären Komponente 35 sollte die Schallkeule möglichst schmal eingestellt sein, so dass eine Breite von deutlich unter einem Meter und bevorzugt von 0,3 bis 0,7 m erreicht wird. Der Erfassungsbereich 28 ist somit recht schmal und kann seitlich weiter entfernte Personen und Gegenstände ausblenden. Die Verwendung einer ausgerichteten Platte ermöglicht eine gegenüber der Lösung mit Rohr etwas verbreiterte Schallkeule 50.

In Figur 7 wird eine Person 54 dargestellt, die sich an die Tür 24 nähert und hierbei den ersten Grenzabstand 32 bereits überschritten hat und den zweiten Grenzabstand erreicht. Gleichzeitig werden eine optische Warnung und eine akustische Warnung ausgestoßen, so dass die Person 54 eindeutig davor gewarnt wird, mit in einer Aktivierungsstellung befindlichem Notrutschenaktivierungshebel 31 die Tür 24 zu öffnen.

Schließlich zeigt Figur 8 ein Ausführungsbeispiel der Anzeigeeinrichtung 2 in einer schematischen, blockbasierten Darstellung. Der Ultraschallsensor 14 sowie die Beschleunigungsmesseinheit 48 sind mit der Elektronikeinheit 16 verbunden, welche überdies drei Aktivierungssignaleingänge 56, 58 und 59 an einem Logikbaustein 76 aufweist. Die Beschleunigungsmesseinheit 48 kann über eine entsprechende Logikschaltung 60 ein Aktivierungssignal erzeugen, welches eine erfolgte Landung repräsentiert, wobei das Aktivierungssignal in diesem Fall an den Aktivierungssignaleingang 56 gesandt wird. Ein weiteres Aktivierungssignal, das an einem mit einem Detektor für die Stellung eines Notrutschenaktivierungshebels verbundenen Anschluss 74 anliegt, kann an den zweiten Aktivierungssignaleingang 58 gesandt werden, das für eine Aktivierungsstellung des Notrutschenaktivierungshebels steht. Befindet sich das Flugzeug am Boden und ist der Notrutschenaktivierungshebel in einer Aktivierungsstellung, wird eine Überwachung des Erfassungsbereichs 30 initiiert. Wird in der Elektronikeinheit 16 festgestellt, dass sich ein Objekt innerhalb mindestens eines Grenzabstands 32, 34 befindet, wird über eine Ausgangssignalstufe 78 eine optische Signalisierung 62 und/oder eine akustische Signalisierung 64 ausgelöst. Das Aktivierungs- bzw. Deaktivierungssignal zum Wechsel zwischen den Betriebsarten kann, wie oben bereits erläutert worden ist, an den Aktivierungssignaleingang 59 gesandt werden.

Die Reseteinrichtung 17 ist mit dem Speicher 9 verbunden und ist, ähnlich wie die Aktivierungseinrichtung 11, als RFID-Lesegerät ausgebildet. Sie ist so ausgestaltet und konfiguriert, dass sie in regelmäßigen Abständen ein drahtloses Abfragesignal mit einem ihr zugewiesenen Code aussendet und dass sie auf ein bestimmtes drahtloses Antwortsignal reagiert, das sie von einem passiven, durch das Abfragesignal mit Energie versorgten RFID-Etikett empfängt. Dieses RFID-Etikett, das zusammen mit der Anzeigeeinrichtung 2 ein System bildet, ist mit der Reseteinrichtung 17 gepaart, d.h. so konfiguriert, dass es auf ein Abfragesignal mit dem Code der Reseteinrichtung 17 mit der Aussendung eines Antwortsignals mit einem dem RFID-Etikett zugewiesenen Code reagiert. Die Reseteinrichtung 17 untersucht das Antwortsignal daraufhin, ob es den Code des mit ihr gepaarten RFID-Etiketts enthält. Nur wenn dies der Fall ist, sendet sie ein Resetsignal an den Speicher 9, das dazu führt, dass der Speicher 9 einen von dem ersten vorbestimmten Wert verschiedenen zweiten vorbestimmten Wert in der vorbestimmten Speicherstelle speichert. Auf diese Weise wird der Speicher 9 für eine nächste Überwachung vorbereitet.

Es versteht sich, dass Filter 66 und 68 der Beschleunigungsmesseinheit 48 bzw. dem Ultraschallsensor 14 nachgeschaltet sind, um eine gewünschte Signalqualität zu erreichen. Eine Stromversorgungseinheit 70 ist ferner mit dem Anschluss 38 verbunden. Zusätzlich ist eine Pin-Programmierungs-Einheit 72 mit der Anzeigeeinrichtung verbunden oder darin integriert, um insbesondere die Ausrichtung der Anzeigeeinrichtung 2 relativ zu der Flugrichtung anzugeben.

## Patentansprüche

1. Anzeigeeinrichtung zum Anzeigen eines nicht autorisierten Öffnens einer Tür (24) eines am Boden geparkten Flugzeugs mit
einem Sensor (14) zum Erfassen eines Abstands zwischen dem Sensor (14) und einem in einem Erfassungsbereich (30) vor dem Sensor (14) befindlichen Objekt,
einer Signalisierungseinrichtung (9), die einen ersten Zustand und einen zweiten Zustand aufweist,
einer mit der Signalisierungseinrichtung (9) gekoppelten Reseteinrichtung (17), die dazu eingerichtet ist, bei Vornahme einer vorbestimmten Resetoperation durch einen Benutzer die Signalisierungseinrichtung (9) in den ersten Zustand zu versetzen,
einer Aktivierungseinrichtung (11), die dazu eingerichtet ist, als Ausgangssignal wahlweise ein vorbestimmtes Deaktivierungssignal und ein vorbestimmtes erstes Aktivierungssignal bereitzustellen, und
einer Steuereinrichtung (16), die mit dem Sensor (14), der Signalisierungseinrichtung (9) und der Aktivierungseinrichtung (11) gekoppelt und dazu eingerichtet ist, um
- bei Empfang des Deaktivierungssignals in eine erste Betriebsart zu wechseln und
- bei Empfang des ersten Aktivierungssignals in eine zweite Betriebsart zu wechseln, in der sie auf Basis eines von dem Sensor (14) gelieferten Sensorsignals, das für den Abstand zwischen dem Sensor (14) und dem Objekt charakteristisch ist, eine Änderung des Abstands zwischen dem Sensor (14) und dem Objekt detektiert und bei Detektion einer Änderung die Signalisierungseinrichtung (9) bis zur Vornahme der vorbestimmten Resetoperation in den zweiten Zustand versetzt,
so dass nach Anordnung des Sensors (14) an einer von einer stationären Komponente (35) im Innenraum eines Flugzeugs beabstandeten Tür (24) des Flugzeugs oder an der stationären Komponente (35) in der Weise, dass sich die stationäre Komponente (35) bzw. die Tür (24) im Erfassungsbereich (30) des Sensors (14) befindet und ein Öffnen der Tür (24) eine Änderung des Abstands des Sensors (14) von der stationären Komponente (35) bzw. der Tür (24) bewirkt, und anschließender Bereitstellung des ersten Aktivierungssignals durch die Aktivierungseinrichtung (11) bei geschlossener Tür (24) ein Wechsel der Signalisierungseinrichtung (9) von dem ersten Zustand in den zweiten Zustand anzeigt, dass die Tür (24) geöffnet worden ist,
wobei die Anzeigeeinrichtung als eine zusammenhängende, kompakte Baueinheit ausgebildet ist, die in eine Türverkleidung (26) einer Flugzeugtür (24) integrierbar ist, wobei die Anzeigeeinrichtung eine optische Signaleinrichtung (10) zum Abgeben eines optischen Signals (62) aufweist, die bei oder nach Versetzen der Signalisierungseinrichtung (9) in den zweiten Zustand aktiviert wird,
wobei die Anzeigeeinrichtung eine akustische Signaleinrichtung (12) zum Abgeben eines akustischen Signals (64) aufweist, die bei oder nach Versetzen der Signalisierungseinrichtung (9) in den zweiten Zustand aktiviert wird, und
wobei die optische Signaleinrichtung und die akustische Signaleinrichtung Teil der Baueinheit sind,
**dadurch gekennzeichnet, dass** die Steuereinrichtung (16) dazu eingerichtet ist, die optische Signaleinrichtung (10) bei einer mit dem Sensor (14) erfassten Annäherung einer Person (54) unterhalb eines ersten Grenzabstands (32) und die akustische Signaleinrichtung (12) bei einer mit dem Sensor (14) erfassten Annäherung einer Person (54) unterhalb eines zweiten Grenzabstands (34) zu betreiben, wobei der erste Grenzabstand (32) größer als der zweite Grenzabstand (34) ist.

2. Anzeigeeinrichtung nach Anspruch 1, bei der die Signalisierungseinrichtung (9) eine nicht-volatile elektronische Speichereinrichtung aufweist und bei der der erste Zustand und der zweite Zustand unterschiedlichen vorbestimmten Werten entsprechen, die in einem vorbestimmten Speicherbereich der Speichereinrichtung gespeichert sind.

3. Anzeigeeinrichtung nach Anspruch 2, bei der die Signalisierungseinrichtung (9) ferner die optische Signaleinrichtung (10) und/oder die akustische Signaleinrichtung (12) aufweist.

4. Anzeigeeinrichtung nach einem der vorhergehenden Ansprüche, bei der der Sensor (14) angepasst ist, den Abstand auf Basis der Laufzeit eines Signals zu erfassen, das von dem Sensor (14) oder einer separaten Signalabgabeeinrichtung ausgesandt, von dem Objekt reflektiert und von dem Sensor (14) empfangen wird.

5. Anzeigeeinrichtung nach Anspruch 4, bei der der Sensor (14) ein Ultraschallsensor ist.

6. Anzeigeeinrichtung nach einem der vorhergehenden Ansprüche, bei der die Aktivierungseinrichtung (11) einen Empfänger zum Empfang drahtloser Signale aufweist und dazu eingerichtet ist, um bei Empfang eines ersten vordefinierten drahtlosen Signals das Deaktivierungssignal und bei Empfang eines zweiten vordefinierten drahtlosen Signals das erste Aktivierungssignal bereitzustellen.

7. Anzeigeeinrichtung nach Anspruch 6, bei der der Empfänger ein RFID-Empfänger ist und das erste und zweite vordefinierte drahtlose Signal durch einen RFID-Sender mit vordefinierter Kennung erzeugbar sind.

8. Anzeigeeinrichtung nach einem der Ansprüche 1 bis 5, bei der die Aktivierungseinrichtung (11) einen Signaleingang zum drahtlosen oder drahtgebundenen Empfang externer Signale aufweist und dazu eingerichtet ist, als Ausgangssignal das jeweils empfangene externe Signal bereitzustellen oder das Deaktivierungssignal bereitzustellen, wenn ein erstes vorbestimmtes externes Signal empfangen wird, und das erste Aktivierungssignal bereitzustellen, wenn ein zweites vorbestimmtes externes Signal empfangen wird.

9. Anzeigeeinrichtung nach einem der vorhergehenden Ansprüche, bei der die vorbestimmte Resetoperation der Empfang eines vordefinierten Resetsignals durch die Anzeigeeinrichtung (2) ist.

10. Anzeigeeinrichtung nach Anspruch 1, die ferner ein Gehäuse (4) mit einem Befestigungsbereich (6) und einer Sichtseite (8) aufweist, wobei der Befestigungsbereich (6) dazu eingerichtet ist, eine mechanische Verbindung mit der Türverkleidung (26) oder einem Befestigungsmittel an der Flugzeugtür (24) einzugehen.

11. Türanordnung für ein Flugzeug, die aufweist:
ein Türblatt (24) mit einer ersten Seite und einer gegenüberliegenden zweiten Seite, das angepasst ist, um in der Weise in einer Öffnung in einem Rumpf eines Flugzeugs montiert zu werden, dass es zwischen einer geschlossenen Position, in der es die Öffnung schließt und die erste Seite einem Innenraum des Flugzeugs zugewandt ist und die zweite Seite nach außen weist, und einer geöffneten Position bewegbar ist, in der die Öffnung zugänglich ist, und
eine Anzeigeeinrichtung (2) nach einem der vorhergehenden Ansprüche, wobei der Sensor (14) an dem Türblatt (24) angeordnet ist.

12. Flugzeug mit
einem Rumpf, in dem eine Öffnung ausgebildet ist, einem Türblatt (24) mit einer ersten Seite und einer gegenüberliegenden zweiten Seite, das angepasst ist, um in der Weise in der Öffnung montiert zu werden, dass es zwischen einer geschlossenen Position, in der es die Öffnung schließt und die erste Seite einem Innenraum des Flugzeugs zugewandt ist und die zweite Seite nach außen weist, und einer geöffneten Position bewegbar ist, in der die Öffnung zugänglich ist,
einer stationären Komponente (35) im Innenraum des Flugzeugs, die von dem Türblatt (24) beabstandet ist, und einer Anzeigeeinrichtung (2) nach einem der Ansprüche 1 bis 10, wobei der Sensor (14) an dem Türblatt (24) oder an der stationären Komponente (35) in der Weise angeordnet ist, dass sich die stationäre Komponente (35) bzw. das Türblatt (24) im Erfassungsbereich (30) des Sensors (14) befindet und ein Öffnen des Türblatts (24) eine Änderung des Abstands des Sensors (14) von der stationären Komponente (35) bzw. dem Türblatt (24) bewirkt.

## Claims

1. Indication device for indicating unauthorized opening of a door (24) of an aircraft parked on the ground, having
a sensor (14) for capturing a distance between the sensor (14) and an object in a capture range (30) in front of the sensor (14),
a signalling device (9) which has a first state and a second state,
a reset device (17) which is coupled to the signalling device (9) and is set up to change the signalling device (9) to the first state if a predetermined reset operation is carried out by a user,
an activation device (11) which is set up to selectively provide a predetermined deactivation signal and a predetermined first activation signal as an output signal, and
a control device (16) which is coupled to the sensor (14), to the signalling device (9) and to the activation device (11) and is set up
- to change to a first operating mode if the deactivation signal is received, and
- to change to a second operating mode if the first activation signal is received, in which second operating mode the control device detects a change in the distance between the sensor (14) and the object, on the basis of a sensor signal which is provided by the sensor (14) and is characteristic of the distance between the sensor (14) and the object, and changes the signalling device (9) to the second state if a change is detected until the predetermined reset operation is carried out,
with the result that, after the sensor (14) has been arranged on a door (24) of an aircraft at a distance from a stationary component (35) in the interior of the aircraft or on the stationary component (35) in such a manner that the stationary component (35) or the door (24) is in the capture range (30) of the sensor (14) and opening of the door (24) changes the distance between the sensor (14) and the stationary component (35) or the door (24), and the first activation signal has subsequently been provided by the activation device (11) when the door (24) is closed, a change of the signalling device (9) from the first state to the second state indicates that the door (24) has been opened,
wherein the indication device is in the form of a cohesive compact structural unit which can be integrated in a door panel (26) of an aircraft door (24),
wherein the indication device has an optical signal device (10) for emitting an optical signal (62), which optical signal device is activated when or after the signalling device (9) is/has been changed to the second state,
wherein the indication device has an acoustic signal device (12) for emitting an acoustic signal (64), which acoustic signal device is activated when or after the signalling device (9) is/has been changed to the second state, and
wherein the optical signal device and the acoustic signal device are part of the structural unit, **characterized in that**
the control device (16) is set up to operate the optical signal device (10) in the event of an approach of a person (54), as captured using the sensor (14), to within a first limit distance (32) and to operate the acoustic signal device (12) in the event of an approach of a person (54), as captured using the sensor (14), to within a second limit distance (34), wherein the first limit distance (32) is greater than the second limit distance (34).

2. Indication device according to Claim 1, in which the signalling device (9) has a non-volatile electronic memory device, and in which the first state and the second state correspond to different predetermined values which are stored in a predetermined memory area of the memory device.

3. Indication device according to Claim 2, in which the signalling device (9) also has the optical signal device (10) and/or the acoustic signal device (12).

4. Indication device according to one of the preceding claims, in which the sensor (14) is adapted to capture the distance on the basis of the propagation time of a signal which is emitted by the sensor (14) or a separate signal emission device, is reflected by the object and is received by the sensor (14).

5. Indication device according to Claim 4, in which the sensor (14) is an ultrasonic sensor.

6. Indication device according to one of the preceding claims, in which the activation device (11) has a receiver for receiving wireless signals and is set up to provide the deactivation signal if a first predefined wireless signal is received and to provide the first activation signal if a second predefined wireless signal is received.

7. Indication device according to Claim 6, in which the receiver is an RFID receiver and the first and second predefined wireless signals can be generated by an RFID transmitter having a predefined identifier.

8. Indication device according to one of Claims 1 to 5, in which the activation device (11) has a signal input for receiving external signals in a wireless or wired manner and is set up to provide, as the output signal, the respectively received external signal or to provide the deactivation signal if a first predetermined external signal is received and to provide the first activation signal if a second predetermined external signal is received.

9. Indication device according to one of the preceding claims, in which the predetermined reset operation is the reception of a predefined reset signal by the indication device (2).

10. Indication device according to Claim 1, which also has a housing (4) with a fastening region (6) and a visible side (8), wherein the fastening region (6) is set up to be mechanically connected to the door panel (26) or to a fastening means on the aircraft door (24).

11. Door assembly for an aircraft, which has:
a door leaf (24) having a first side and an opposite, second side, which door leaf is adapted to be mounted in an opening in a fuselage of an aircraft in such a manner that it can be moved between a closed position, in which it closes the opening and in which the first side faces an interior of the aircraft and the second side points outwards, and an open position in which the opening is accessible, and
an indication device (2) according to one of the preceding claims, wherein the sensor (14) is arranged on the door leaf (24).

12. Aircraft having
a fuselage in which an opening is formed,
a door leaf (24) having a first side and an opposite, second side, which door leaf is adapted to be mounted in the opening in such a manner that it can be moved between a closed position, in which it closes the opening and in which the first side faces an interior of the aircraft and the second side points outwards, and an open position in which the opening is accessible,
a stationary component (35) in the interior of the aircraft, which component is at a distance from the door leaf (24), and
an indication device (2) according to one of Claims 1 to 10,
wherein the sensor (14) is arranged on the door leaf (24) or on the stationary component (35) in such a manner that the stationary component (35) or the door leaf (24) is in the capture range (30) of the sensor (14) and opening of the door leaf (24) changes the distance between the sensor (14) and the stationary component (35) or the door leaf (24) .

## Revendications

1. Dispositif d'indication destiné à indiquer une ouverture non autorisée d'une porte (24) d'un aéronef stationné au sol, comprenant
un capteur (14) destiné à détecter une distance entre le capteur (14) et un objet qui se trouve dans une zone de détection (30) devant le capteur (14),
un dispositif de signalisation (9) qui possède un premier état et un deuxième état,
un dispositif de réarmement (17) connecté au dispositif de signalisation (9), qui est conçu pour amener le dispositif de signalisation (9) dans le premier état lorsqu'une opération de réarmement prédéterminée est effectuée par un utilisateur,
un dispositif d'activation (11) qui est conçu pour délivrer au choix, en tant que signal de sortie, un signal de désactivation prédéterminé et un premier signal d'activation prédéterminé, et
un dispositif de commande (16) qui est connecté au capteur (14), au dispositif de signalisation (9) et au dispositif d'activation (11) et qui est conçu pour
- basculer dans un premier mode de fonctionnement lors de la réception du signal de désactivation et
- lors de la réception du premier signal de désactivation, basculer dans un deuxième mode de fonctionnement dans lequel, en se basant sur un signal de capteur délivré par le capteur (14) qui est caractéristique de la distance entre le capteur (14) et l'objet, il détecte une modification de la distance entre le capteur (14) et l'objet et, lors de la détection d'une modification, amène le dispositif de signalisation (9) dans le deuxième état jusqu'à ce que l'opération de réarmement prédéterminée soit effectuée, de telle sorte qu'après avoir monté le capteur (14) au niveau d'une porte (24) d'un aéronef espacée d'un composant fixe (35) dans l'espace intérieur de l'aéronef ou niveau du composant fixe (35) de manière à ce que le composant fixe (35) ou la porte (24) se trouve dans la zone de détection (30) du capteur (14) et qu'une ouverture de la porte (24) produise une modification de la distance entre le capteur (14) et le composant fixe (35) ou la porte (24), et qu'ensuite la fourniture du premier signal d'activation par le dispositif d'activation (11) alors que la porte (24) est fermée, un basculement du dispositif de signalisation (9) du premier état dans le deuxième état indique que la porte (24) a été ouverte,
le dispositif d'indication étant réalisé sous la forme d'un module compact cohérent qui peut être intégré dans un habillage de porte (26) d'une porte d'aéronef (24), le dispositif d'indication possédant un dispositif de signalement visuel (10) destiné à délivrer un signal visuel (62), lequel est activé au moment d'amener ou après avoir amené le dispositif de signalisation (9) dans le deuxième état,
le dispositif d'indication possédant un dispositif de signalement sonore (12) destiné à délivrer un signal sonore (64), lequel est activé au moment d'amener ou après avoir amené le dispositif de signalisation (9) dans le deuxième état, et
le dispositif de signalement visuel et le dispositif de signalement sonore faisant partie du module, **caractérisé en ce que**
le dispositif de commande (16) est conçu pour faire fonctionner le dispositif de signalement visuel (10) dans le cas d'une détection avec le capteur (14) d'une personne (54) qui s'approche à moins d'une première distance limite (32) et le dispositif de signalement sonore (12) dans le cas d'une détection avec le capteur (14) d'une personne (54) qui s'approche à moins d'une deuxième distance limite (34), la première distance limite (32) étant supérieure à la deuxième distance limite (34).

2. Dispositif d'indication selon la revendication 1, avec lequel le dispositif de signalisation (9) possède un dispositif de mémorisation électronique non volatile et avec lequel le premier état et le deuxième état correspondent à des valeurs prédéterminées différentes qui sont enregistrées dans une zone de mémoire prédéterminée du dispositif de mémorisation.

3. Dispositif d'indication selon la revendication 2, avec lequel le dispositif de signalisation (9) possède en outre le dispositif de signalement visuel (10) et/ou le dispositif de signalement sonore (12).

4. Dispositif d'indication selon l'une des revendications précédentes, avec lequel le capteur (14) est adapté pour détecter la distance sur la base du temps de propagation d'un signal qui est émis par le capteur (14) ou un dispositif de délivrance de signal séparé, réfléchi par l'objet et reçu par le capteur (14) .

5. Dispositif d'indication selon la revendication 4, avec lequel le capteur (14) est un capteur à ultrasons.

6. Dispositif d'indication selon l'une des revendications précédentes, avec lequel le dispositif d'activation (11) possède un récepteur destiné à recevoir des signaux sans fil et conçu pour fournir le signal de désactivation lors de la réception d'un premier signal sans fil prédéfini et le premier signal d'activation lors de la réception d'un deuxième signal sans fil prédéfini.

7. Dispositif d'indication selon la revendication 6, avec lequel le récepteur est un récepteur RFID et les premier et deuxième signaux sans fil prédéfinis peuvent être générés par un émetteur RFID avec un identificateur prédéfini.

8. Dispositif d'indication selon l'une des revendications 1 à 5, avec lequel le dispositif d'activation (11) possède une entrée de signal destinée à la réception sans fil ou filaire de signaux externes et il est conçu pour fournir, en tant que signal de sortie, le signal externe respectivement reçu ou fournir le signal de désactivation lorsqu'un premier signal externe prédéterminé a été reçu, et fournir le premier signal d'activation lorsqu'un deuxième signal externe prédéterminé a été reçu.

9. Dispositif d'indication selon l'une des revendications précédentes, avec lequel l'opération de réarmement prédéterminée est la réception d'un signal de réarmement prédéfini par le dispositif d'indication (2) .

10. Dispositif d'indication selon la revendication 1, qui possède en outre un boîtier (4) comprenant une zone de fixation (6) et un côté apparent (8), la zone de fixation (6) étant conçue pour intervenir dans un assemblage mécanique avec l'habillage de porte (26) ou un moyen de fixation au niveau de la porte d'aéronef (24).

11. Arrangement de porte pour un aéronef, comprenant :
un panneau de porte (24) pourvu d'un premier côté et d'un deuxième côté opposé, qui est adapté pour être monté dans une ouverture dans un fuselage d'un aéronef de telle sorte qu'il peut être déplacé entre une position fermée, dans laquelle il ferme l'ouverture et le premier côté fait face à un espace intérieur de l'aéronef et le deuxième côté est orienté vers l'extérieur, et une position ouverte dans laquelle l'ouverture est accessible, et
un dispositif d'indication (2) selon l'une des revendications précédentes, le capteur (14) étant disposé au niveau du panneau de porte (24).

12. Aéronef comprenant
un fuselage dans lequel est formée une ouverture,
un panneau de porte (24) pourvu d'un premier côté et d'un deuxième côté opposé, qui est adapté pour être monté dans l'ouverture de telle sorte qu'il peut être déplacé entre une position fermée, dans laquelle il ferme l'ouverture et le premier côté fait face à un espace intérieur de l'aéronef et le deuxième côté est orienté vers l'extérieur, et une position ouverte dans laquelle l'ouverture est accessible,
un composant fixe (35) dans l'espace intérieur de l'aéronef, qui est espacé du panneau de porte (24), et un dispositif d'indication (2) selon l'une des revendications 1 à 10,
le capteur (14) étant monté au niveau du panneau de porte (24) ou au niveau du composant fixe (35) de telle sorte que le composant fixe (35) ou le panneau de porte (24) se trouvent dans la zone de détection (30) du capteur (14) et une ouverture du panneau de porte (24) produit une modification de la distance du capteur (14) par rapport au composant fixe (35) ou au panneau de porte (24).
